# EUROPEAN PATENT APPLICATION

(11) **EP 2 566 233 A1**
(43) Date of publication of application: **06.03.2013**
(21) Application number: 11774425.0
(22) Date of filing: 29.04.2011
(51) Int. Cl.: H04W 28/06

(54) **DATA TRANSMISSION DEVICE, METHOD AND COMMUNICATION SYSTEM**

(30) Priority: 30.04.2010 CN 201010160890
(71) Applicant: Huawei Technologies Co., Ltd., Shenzhen, Guangdong 518129 (CN)
(72) Inventor: ZHAO, Yongxiang, Shenzhen Guangdong 518129 (CN); WANG, Jingyu, Shenzhen Guangdong 518129 (CN); YONG, Wenyuan, Shenzhen Guangdong 518129 (CN); GU, Wei, Shenzhen Guangdong 518129 (CN)
(74) Representative: Thun, Clemens
(86) International application number: PCT/CN2011/073572
(87) International publication number: WO 2011/134434

(57) **Abstract**

The present invention discloses a data transmission device and method and a communication system, which relate to the field of communications technologies, to solve the problem of high operation and maintenance cost of a radio network and low quality of service of a radio broadband service in the prior art. The data transmission device provided in the present invention is located on an IP metropolitan area network node or on an optical line terminal of a radio access network and includes: a first service bypass processing module, configured to receive uplink packet service data sent by a user equipment, determine, according to a preset service distribution policy, that the uplink packet service data needs distribution, and directly send the uplink packet service data to a public data network PDN through a locally preset Gi interface; and/or a second service bypass processing module, configured to directly receive, through the Gi interface, downlink packet service data sent by the PDN to the UE and send the downlink packet service data to the UE. The embodiments of the present invention are applicable to radio communication systems such 3G or LTE.

## Description

This application claims priority to Chinese Patent Application No. 201010160890.4, filed with the Chinese Patent Office on April 30, 2010 and entitled "DATA TRANSMISSION DEVICE AND METHOD, AND COMMUNICATION SYSTEM", which is incorporated herein by reference in its entirety.

### FIELD OF THE INVENTION

The present invention relates to the field of communications technologies, and in particular, to a data transmission device and method, and a communication system.

### BACKGROUND OF THE INVENTION

On an existing radio communication system packet switched domain (Packet Switch, PS) network, a node having service bypass (including service distribution and injection) functions is located on a core network, and subscribers communicate with a public data network (Public Data Network, PDN) through the node having the service bypass functions.

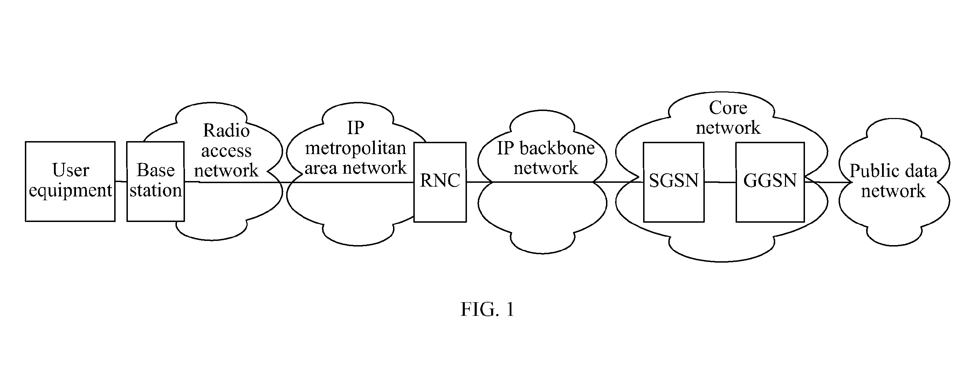

For example, as shown in FIG. 1, on a universal mobile telecommunications system (Universal Mobile Telecommunications System, UMTS)/high speed packet access (High Speed Packet Access, HSPA) network, a gateway GPRS support node (Gateway GPRS Support Node, GGSN) on the core network is a node having service bypass functions. When data is transmitted in uplink, packet service data sent by a subscriber gets access to a radio access network through a radio access base station (NodeB), and is transmitted to a radio network controller (Radio Network Controller, RNC) via the radio access network and an IP metropolitan area network. After completing processing of radio resources and protocol adaptation to the core network, the RNC transmits the packet service data to a serving GPRS support node (Serving GPRS Support Node, SGSN) and the GGSN on the core network via an IP backbone network. The GGSN distributes the packet service data to different service subsystems (such as the Internet, VOIP, Vidio or VAS) of the PDN through a Gi interface. When data is transmitted in downlink, the GGSN on the core network injects, through the Gi interface, packet service data sent by different service subsystems of the PDN to the subscriber, and transmits the packet service data to the subscriber through the SGSN on the core network, the IP backbone network, the RNC, the IP metropolitan area network, the radio access network and the NodeB.

In the prior art, the node having the service bypass functions is located on the core network. Service distribution points/injection points are too high with respect to subscribers, and the packet service data transmitted between the subscribers and different service subsystems of the PDN needs to be transmitted via multiple levels of transmission networks and multiple network elements, resulting in a long transmission distance, high cost and long delay, which is unfavorable to development of services requiring high quality of service, such as a broadband video service.

### SUMMARY OF THE INVENTION

Embodiments of the present invention provide a data transmission device and method and a communication system, which are capable of saving operation and maintenance cost of a radio network and improving quality of service.

In one aspect, a data transmission device is provided, where the data transmission device is located on an IP metropolitan area network node or on an optical line terminal of a radio access network, and includes:
a first service bypass processing module, configured to receive uplink packet service data sent by a user equipment, determine, according to a preset service distribution policy, that the uplink packet service data needs distribution, and directly distribute the uplink packet service data to a public data network PDN through a locally preset Gi interface; and/or
a second service bypass processing module, configured to directly receive, through the Gi interface, downlink packet service data sent by the PDN to the user equipment, and send the downlink packet service data to the user equipment.

The data transmission device provided in the embodiment of the present invention is located on an IP metropolitan area network node or on an optical line terminal of a radio access network, and is capable of distributing and injecting packet service data transmitted between a user equipment and a PDN, and lowers a position of a service distribution/injection point in network architecture, shortens a data transmission distance between the user equipment and the PDN, saves operation and maintenance cost of the radio network, improves quality of service, and is applicable to development of services requiring high quality of service, such as a broadband video service.

In another aspect, a communication system is further provided, including:
a data transmission device, located on an IP metropolitan area network node or on an optical line terminal of a radio access network, configured to receive, from a radio access device, uplink packet service data sent by a user equipment, determine, according to a preset service distribution policy, that the uplink packet service data needs distribution, and directly distribute the uplink packet service data to a public data network PDN through a locally preset Gi interface, and/or configured to directly receive, through the Gi interface, downlink packet service data sent by the PDN to the user equipment and send the downlink packet service data to the radio access device; and
the radio access device, located on a radio access network node, including an RRU and a base band unit BBU, where the radio access device is connected to the data transmission device through an IDX interface via a high bandwidth bearer network, and the radio access device is configured to receive the uplink packet service data sent by the user equipment, and send the uplink packet service data to the data transmission device, and/or receive the downlink packet service data sent by the data transmission device, and send the downlink packet service data to the user equipment.

According to the communication system provided in the embodiment of the present invention, packet service data transmitted between a user equipment and a PDN can be distributed and injected through a data transmission device located on an IP metropolitan area network node or on an optical line terminal of a radio access network, a position of a service distribution/injection point in network architecture is lowered, a data transmission distance between the user equipment and the PDN is shortened, operation and maintenance cost of a radio network is saved, quality of service is improved, and the communication system is applicable to development of services requiring high quality of service, such as a broadband video service. As a radio access device and the data transmission device adopt two-level architecture setting, deployment of the radio access device on the radio access network is more flexible, so as to meet requirements of low maintenance cost and flexible deployment of radio access.

In another aspect, a communication system is further provided, including:
a data transmission device, located on an IP metropolitan area network node or on an optical line terminal of a radio access network, configured to receive, through a base band unit, uplink packet service data of a user equipment sent by a radio remote unit device, determine, according to a preset service distribution policy, that the uplink packet service data needs distribution, and directly distribute the uplink packet service data to a public data network PDN through a locally preset Gi interface, and/or configured to directly receive, through the Gi interface, downlink packet service data sent by the PDN to the user equipment and send the downlink packet service data to the radio remote unit device through the base band unit, where the base band unit is located on the data transmission device; and
the radio remote unit device, located on a radio access network node, connected to the base band unit of the data transmission device through a CPRI interface via a high bandwidth bearer network, and configured to receive the uplink packet service data sent by the user equipment, and send the uplink packet service data to the base band unit of the data transmission device, and/or receive the downlink packet service data sent by the base band unit of the data transmission device, and send the downlink packet service data to the user equipment.

According to the communication system provided in the embodiment of the present invention, packet service data transmitted between a user equipment and a PDN can be distributed and injected through a data transmission device located on an optical line terminal of a radio access network, a position of a service distribution/injection point in network architecture is lowered, a data transmission distance between the user equipment and the PDN is shortened, operation and maintenance cost of a radio network is saved, quality of service is improved, and the communication system is applicable to development of services requiring high quality of service, such as a broadband video service. As a radio remote unit device and the data transmission device adopt two-level architecture setting, deployment of the radio remote unit device on the radio access network is more flexible, so as to meet requirements of low maintenance cost and flexible deployment of radio access.

In further another aspect, a data transmission method is provided, including: receiving, by a data transmission device located on an IP metropolitan area network node or on an optical line terminal of a radio access network, uplink packet service data sent by a user equipment, determining, according to a preset service distribution policy, that the uplink packet service data needs distribution, and directly distributing the uplink packet service data to a public data network PDN through a locally preset Gi interface; and/or directly receiving, by the data transmission device, through the Gi interface, downlink packet service data sent by the PDN to the user equipment, and sending the downlink packet service data to the user equipment.

According to the data transmission method provided in the embodiment of the present invention, packet service data transmitted between a user equipment and a PDN is distributed and injected through a data transmission device located on an IP metropolitan area network node or on an optical line terminal of a radio access network, and a position of a service distribution/injection point in network architecture is lowered, a data transmission distance between the user equipment and the PDN is shortened, operation and maintenance cost of a radio network is saved, quality of service is improved, and the method is applicable to development of services requiring high quality of service, such as a broadband video service.

### BRIEF DESCRIPTION OF THE DRAWINGS

To illustrate technical solutions according the embodiments of the present invention or in the prior art more clearly, accompanying drawings for describing the embodiments or the prior art are outlined below. Apparently, the accompanying drawings in the following description are only some embodiments of the present invention, and persons of ordinary skill in the art can derive other drawings from the accompanying drawings without creative efforts.
FIG. 1 is a schematic diagram of UMTS/HSAP network architecture in the prior art;
FIG. 2 is a schematic structural diagram of a data transmission device provided in an embodiment of the present invention;
FIG. 3 is a schematic structural diagram of a data transmission device provided in another embodiment of the present invention;
FIG. 4 is a schematic structural diagram of a data transmission device provided in further another embodiment of the present invention;
FIG. 5 is a schematic structural diagram of a data transmission device provided in further another embodiment of the present invention;
FIG. 6 is a first schematic structural diagram of a communication system provided in an embodiment of the present invention;
FIG. 7 is a second schematic structural diagram of a communication system provided in an embodiment of the present invention;
FIG. 8 is a schematic structural diagram of a communication system provided in another embodiment of the present invention;
FIG. 9 is a flowchart of a data transmission method provided in an embodiment of the present invention; and
FIG. 10 is a flowchart of a method for transmitting packet service data between a UE and a PDN by adopting a data transmission device and a communication system provided in an embodiment of the present invention.

### DETAILED DESCRIPTION OF THE EMBODIMENTS

The technical solutions of the present invention will be clearly and comprehensively described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

To solve the problem of high operation and maintenance cost of a radio network and low quality of service of a radio broadband service in the prior art, embodiments of the present invention provide a data transmission device and method and a communication system.

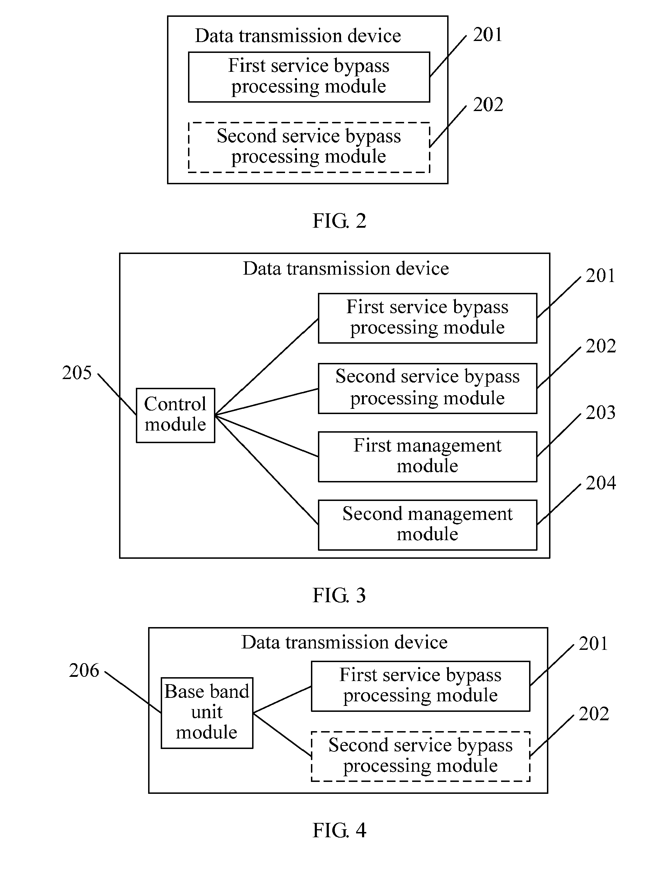

As shown in FIG. 2, an embodiment of the present invention provides a data transmission device, where the data transmission device is located on an IP metropolitan area network node, and includes:
a first service bypass processing module 201, configured to receive uplink packet service data sent by a user equipment (User Equipment, UE), determine, according to a preset service distribution policy, that the uplink packet service data needs distribution, and directly distribute the uplink packet service data to a PDN through a locally preset Gi interface; and/or
a second service bypass processing module 202, configured to directly receive, through the Gi interface, downlink packet service data sent by the PDN to the UE, and send the downlink packet service data to the user equipment.

In this embodiment, the first service bypass processing module 201 may be implemented through a local break out gateway (Local Break Out Gateway, LBO GW) function unit. Specifically, the LOB GW may obtain an access point name (Access Point Name, APN) from the uplink packet service data, determine, according to the APN and the preset service distribution policy, that the uplink packet service data needs distribution, and directly distribute the uplink packet service data to the PDN through the locally preset Gi interface. Further, the LBO GW may adopt a deep packet inspection technology (DPI) to obtain information such as a service type from the uplink packet service data, determine, according to the information such as the service type and the preset service distribution policy, that the uplink packet service data needs distribution, and directly distribute the uplink packet service data to the PDN through the locally preset Gi interface.

In this embodiment, the service distribution policy may be preset on the data transmission device. For example, a storage module may be set on the data transmission device and the service distribution policy is stored in the storage module. The service distribution policy may also be preset on another network element, such as a policy and charging rules function (PCRF) entity, and the data transmission device (specifically, the first service bypass processing module 201) may obtain the service distribution policy by communicating with the network element.

In this embodiment, various forms of service distribution policies may exist. For example, a service distribution policy may be APNs that need distribution. If an APN included in the uplink packet service data received by the first service bypass processing module 201 is the same as an APN that needs distribution and is included in the service distribution policy, the uplink packet service data needs distribution. For another example, a service distribution policy may be a service type (such as an Internet service or a video service) of services that need distribution. If a service type included in the uplink packet service data received by the first service bypass processing module 201 is the same as a service type that needs distribution and is included in the service distribution policy, the uplink packet service data needs distribution. Definitely, the service distribution policy may be set in other forms in practice, and detailed description for each situation is not provided herein.

In this embodiment, the first service bypass processing module 201 and/or the second service bypass processing module 202 may communicate with the UE through a radio access device on a radio access network node close to a user side.

The radio access device is configured to receive the uplink packet service data sent by the UE, and send the uplink packet service data to the first service bypass processing module 201, and/or receive the downlink packet service data sent by the second service bypass processing module 202, and send the downlink packet service data to the UE.

In this embodiment, the radio access device includes a radio remote unit (Radio Remote Unit, RRU 2021 and a base band unit (Base Band Unit, BBU) 2022. The radio access device may be set separately as an independent device, or embedded on a node (such as a NodeB in UMTS/HSPA network architecture or an eNodeB in LTE network architecture) that is close to the user side and is on the radio access network. In this case, the radio access device may communicate with the first service bypass processing module 201 and/or the second service bypass processing module 202 through an internal data exchange protocol (Internal Data Exchange, IDX) interface via a high bandwidth bearer network (such as a fiber network).

Further, to avoid a problem that quality of packet service data transmitted between the data transmission device and the radio access device may be seriously affected by network environment because the data transmission device provided in the embodiment of the present invention is located on a relatively higher position with respect to the radio access device, in this embodiment, the data transmission device may also be set on an optical line terminal (Optical Line Terminal, OLT) of the radio access network.

Further, to improve the quality of service of the data transmission device provided in the embodiment of the present invention, in this embodiment, the data transmission device may have functions such as high-speed cache (Cache), proactive network provider participation for P2P (Proactive network Provider Participation for P2P, P4P) switch service processing and firewall (Firewall).

The data transmission device provided in the embodiment of the present invention is located on an IP metropolitan area network node or on an optical line terminal of a radio access network, and is capable of distributing and injecting packet service data transmitted between UE and the PDN, and lowers a position of a service distribution/injection point in network architecture, shortens a data transmission distance between the UE and the PDN, saves operation and maintenance cost of a radio network, improves quality of service of the radio network, and is applicable to development of services requiring high quality of service, such as a broadband video service. As the data transmission device provided in this embodiment and the radio access device adopt two-level architecture setting, deployment of the radio access device on the radio access network is more flexible, so as to meet requirements of low maintenance cost and flexible deployment of radio access.

Another embodiment of the present invention further provides a data transmission device, where the data transmission device is basically the same as that shown in FIG. 2. The differences are as follows:
As shown in FIG. 3, the data transmission device provided in the embodiment of the present invention may further include:
   a first management module 203, configured to manage and control radio resources and provide a connection interface for communication with another network element when the data transmission device is applied in 3G network architecture (such as UMTS/HSPA); and/or
   a second management module 204, configured to manage and control radio resources and provide a connection interface for communication with another network element when the data transmission device is applied in long term evolution (Long Term Evolution, LTE) network architecture.

In this embodiment, the first management module 203 may have a radio resource control function (such as an RNC function) and Iub, Iu-CS/PS and Iur interface functions, and optionally, may further have a GGSN function. The second management module 204 may have S1 and X2 interface functions, and optionally, may further have a packet data gateway (PDN Gateway, P-GW) function.

Optionally, in this embodiment, if the first service bypass processing module 201 determines that the uplink packet service data sent by the UE to the PDN does not need distribution, the first service bypass processing module 201 may transmit the uplink packet service data to a GGSN/P-GW on a core network through a locally preset Iu-PS interface or S1 interface via an IP backbone network and an SGSN or a mobility management entity (mobility management entity, MME) on the core network, and then the GGSN/P-GW transmits the uplink packet service data to the PDN.

Further, as shown in FIG. 3, the data transmission device provided in the embodiment of the present invention may further include:
a control module 205, configured to manage and control function setting and working status of the first service bypass processing module 201, the second service bypass processing module 202, the first management module 203 and the second management module 204.

In this embodiment, the control module 205 may manage and control the function setting and working status of the first service bypass processing module 201, the second service bypass processing module 202, the first management module 203 and the second management module 204 in a software control manner. For example, when the data transmission device provided in the embodiment of the present invention is applied in the UMTS/HSPA network architecture, the control module 205 may start the first management module 203 and stop the second management module 204 in a software control manner. For another example, when the radio network needs to be upgraded from UMTS/HSPA to LTE, the control module 205 may stop the first management module 203 and start the second management module 204 in a software control manner. For further another example, the control module 205 may add a function such as Firewall or P4P switch to the data transmission device in a software control manner.

While lowering a position of a service distribution/injection point and shortening a data transmission distance between a UE and a PDN, the data transmission device provided in the embodiment of the present invention may further provide functions such as radio resource management and control in 3G and/or LTE network architecture and a connection interface for communication with another network element. As the data transmission device provided in the embodiment of the present invention has the radio resource management and control functions in the 3G and LTE network architecture, technical solutions provided in the embodiment of the present invention avoid a problem of operator device investment loss during a network evolution process in the prior art due to that a 3G network includes an RNC device but an LTE network has no RNC device. As the data transmission device provided in the embodiment of the present invention is integrated with interface functions (such as Iub, Iu-CS/PS and Iur interfaces, as well as S1 and X2 interfaces), deployment of a radio access device on a radio access network is more flexible, thereby reducing network operation and maintenance cost and solving a problem in the prior art that, in the LTE network architecture, due to a large number of evolved base stations (integrated with radio access and interface functions), connections between the evolved base stations and other network elements (such as core network elements or other evolved base stations) are complex and network operation and maintenance cost is high. The data transmission device provided in the embodiment of the present invention is capable of managing and controlling function setting and working status of the first service bypass processing module, the second service bypass processing module, the first management module and the second management module through the control module, and therefore the data transmission device provided in the embodiment of the present invention is more suitable for smooth evolution of a network.

Further another embodiment of the present invention provides a data transmission device, where the data transmission device is basically the same as that shown in FIG. 2. The differences are as follows:
When a radio access device only includes an RRU, as shown in FIG. 4, the data transmission device provided in the embodiment of the present invention may further include:
   a base band unit module 206, configured to communicate with the radio access device, namely, the RRU, through a common public radio interface (Common Public Radio Interface, CPRI), and communicate with a UE through the RRU.

Specifically, the base band unit module 206 may communicate with the RRU through the CPRI via a high bandwidth bearer network (such as a fiber network), receive uplink packet service data sent by the RRU, and send the uplink packet service data to the first service bypass processing module 201 for processing; and/or the base band unit module 206 receives downlink packet service data sent by the second service bypass processing module 202, and sends the downlink packet service data to the RRU through the CPRI via a high bandwidth bearer network (such as a fiber network), and then the RRU sends the downlink packet service data to the UE.

While lowering a position of a service distribution/injection point and shortening a data transmission distance between a UE and a PDN, the data transmission device provided in the embodiment of the present invention further moves the base band unit (BBU) up to the data transmission device, so that a base band unit pool (BBU Pool) is formed inside the data transmission device, thereby enhancing BBU resource sharing and meanwhile increasing cell edge gains.

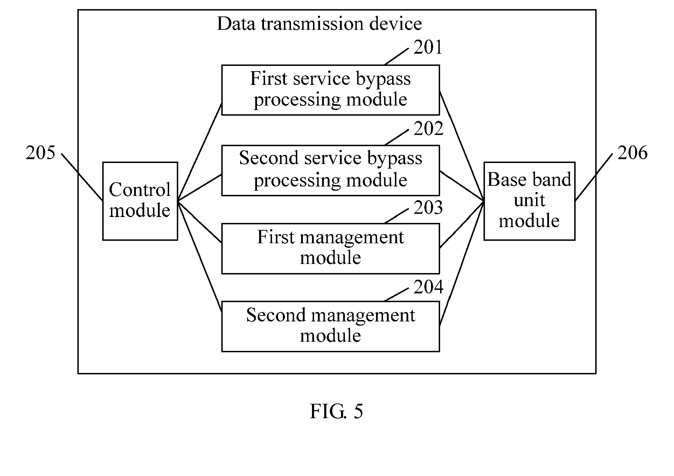

Further another embodiment of the present invention provides a data transmission device, where the data transmission device is basically the same as that shown in FIG. 3. The differences are as follows:
When a radio access device only includes an RRU, as shown in FIG. 5, the data transmission device provided in the embodiment of the present invention may further include:
   a base band unit module 206, configured to communicate with the radio access device, namely, the RRU, through a CPRI, and communicate with a UE through the RRU.

Specifically, the base band unit module 206 communicates with the RRU through the CPRI via a high bandwidth bearer network (such as a fiber network), receives uplink packet service data sent by the RRU and sends the uplink packet service data to the first service bypass processing module 201, and the first management module 203 or the second management module 204 or the like for processing; and/or the base band unit module 206 receives downlink packet service data sent by the second service bypass processing module 202, and the first management module 203 or the second management module 204 or the like and sends the downlink packet service data to the RRU through the CPRI via a high bandwidth bearer network (such as a fiber network), and then the RRU sends the downlink packet service data to the UE.

While lowering a position of a service distribution/injection point and shortening a data transmission distance between a UE and a PDN, the data transmission device provided in the embodiment of the present invention may further provide functions such as radio resource management and control in 3G and/or LTE network architecture and a connection interface for communication with another network element. As the data transmission device provided in the embodiment of the present invention has the radio resource management and control functions in the 3G and LTE network architecture, technical solutions provided in the embodiment of the present invention avoid a problem of operator device investment loss during a network evolution process in the prior art due to that a 3G network includes an RNC device but an LTE network has no RNC device. As the data transmission device provided in the embodiment of the present invention is integrated with interface functions (such as Iub, Iu-CS/PS and Iur interfaces, as well as S1 and X2 interfaces), deployment of a radio access device on a radio access network is more flexible, thereby reducing network operation and maintenance cost and solving a problem in the prior art that, in the LTE network architecture, due to a large number of evolved base stations (integrated with radio access and interface functions), connections between the evolved base stations and other network elements (such as core network elements or other evolved base stations) are complex and network operation and maintenance cost is high. The data transmission device provided in the embodiment of the present invention is capable of managing and controlling function setting and working status of the first service bypass processing module, the second service bypass processing module, the first management module and the second management module through the control module, and therefore the data transmission device provided in the embodiment of the present invention is more suitable for smooth evolution of a network. Because the base band unit module is included in the data transmission device, a base band unit pool (BBU Pool) is formed inside the data transmission device, thereby enhancing BBU resource sharing and meanwhile increasing cell edge gains.

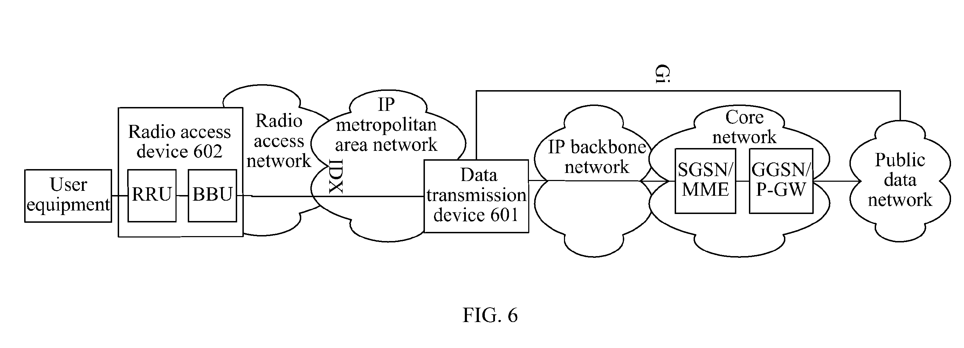

As shown in FIG. 6, an embodiment of the present invention further provides a communication system, including:
a data transmission device 601, located on an IP metropolitan area network node, and configured to receive, from a radio access device 602, uplink packet service data sent by a UE, determine, according to a preset service distribution policy, that the uplink packet service data needs distribution, and directly distribute the uplink packet service data to a public data network PDN through a locally preset Gi interface, and/or directly receive, through the Gi interface, downlink packet service data sent by the PDN to the UE, and send the downlink packet service data to the radio access device 602; and
the radio access device 602, which may be located on a radio access network node close to a user side, , where the radio access device 602 includes an RRU and a BBU and is connected to the data transmission device 601 through an IDX interface via a high bandwidth bearer network, and is configured to receive the uplink packet service data sent by the UE, send the uplink packet service data to the data transmission device 601, and/or receive the downlink packet service data sent by the data transmission device 601, and send the downlink packet service data to the UE.

Further, the data transmission device 601 may be further configured to manage and control radio resources and provide a connection interface for communication with another network element when the data transmission device 601 is applied in 3G network architecture, and/or manage and control radio resources and provide a connection interface for communication with another network element when the data transmission device 601 is applied in LTE network architecture.

Specifically, when the data transmission device 601 is configured to manage and control radio resources and provide a connection interface for communication with another network element in the 3G network architecture, the data transmission device 601 may have a radio resource control function (such as an RNC function) and Iub, Iu-CS/PS and Iur interface functions or the like, and optionally, may further have a GGSN function. When the data transmission device 601 is configured to manage and control radio resources and provide a connection interface for communication with another network element in the LTE network architecture, the data transmission device 601 may have S1 and X2 interface functions, and optionally may further have a P-GW function.

Optionally, in this embodiment, if the data transmission device 601 determines that the uplink packet service data sent by the UE to the PDN does not need distribution, the data transmission device 601 may transmit the packet service data to a GGSN/P-GW on a core network through a locally preset Iu-PS interface or S1 interface via an IP backbone network and an SGSN/MME on the core network, and the GGSN/P-GW transmits the uplink packet service data to the PDN.

Further, to improve quality of service of the communication system provided in the embodiment, in this embodiment, the data transmission device 601 may further have functions such as Cache, P4P Switch and Firewall.

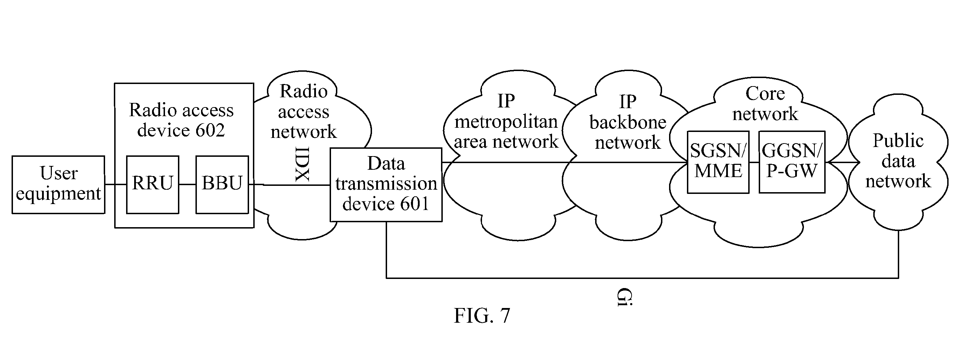

Further, to avoid a problem that quality of packet service data transmitted between the data transmission device 601 and the radio access device 602 may be seriously affected by network environment as the data transmission device 601 is located on a relatively higher position with respect to the radio access device 602. As shown in FIG. 7, the data transmission device 601 may also be set on an optical line terminal of a radio access network.

For details about implementation of the communication system provided in the embodiment of the present invention, reference may be made to description of the data transmission device provided in the embodiments of the present invention, and details are not repeated herein.

According to the communication system provided in the embodiment of the present invention, packet service data transmitted between a UE and a PDN can be distributed and injected through a data transmission device located on an IP metropolitan area network node or on an optical line terminal of a radio access network, and a position of a service distribution/injection point in network architecture is lowered, a data transmission distance between the UE and the PDN is shortened, operation and maintenance cost of a radio network is saved, quality of service of the radio network is improved, and the communication system is applicable to development of services requiring high quality of service, such as a broadband video service. As the data transmission device has radio resource management and control functions in 3G and LTE network architecture, technical solutions provided in the embodiment of the present invention avoid a problem of operator device investment loss during a network evolution process in the prior art due to that a 3G network includes an RNC device but an LTE network has no RNC device. As the data transmission device provided in the embodiment of the present invention is integrated with interface functions (such as Iub, Iu-CS/PS and Iur interfaces, as well as S1 and X2 interfaces), deployment of a radio access device on a radio access network is more flexible, thereby reducing network operation and maintenance cost and solving a problem in the prior art that, in the LTE network architecture, due to a large number of evolved base stations (integrated with radio access and interface functions), connections between the evolved base stations and other network elements (such as core network elements or other evolved base stations) are complex and network operation and maintenance cost is high.

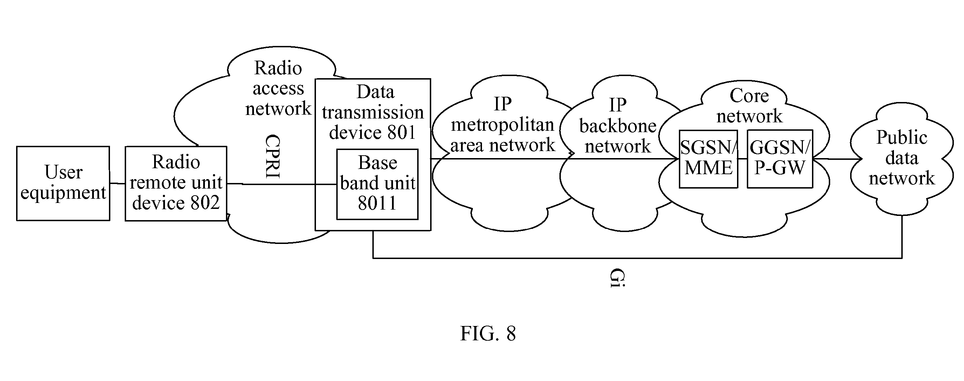

As shown in FIG. 8, another embodiment of the present invention further provides a communication system, including:
a data transmission device 801, located on an OLT on a radio access network, and configured to receive, through a base band unit 8011, uplink packet service data of a UE sent by a radio remote unit device 802, determine, according to a preset service distribution policy, that the uplink packet service data needs distribution, and directly distribute the uplink packet service data to a PDN through a locally preset Gi interface, and/or directly receive, through the Gi interface, downlink packet service data sent by the PDN to the UE, and send the downlink packet service data to the radio remote unit device 802 through the base band unit 8011, where the base band unit 8011 is located on the data transmission device 801; and
the radio remote unit device 802, located on a radio access network node close to a user side, connected to the base band unit 8011 of the data transmission device 801 through a CPRI interface via a high bandwidth bearer network, and configured to receive the uplink packet service data sent by the UE, and send the uplink packet service data to the base band unit 8011 of the data transmission device 801, and/or receive the downlink packet service data sent by the base band unit 8011 of the data transmission device 801, and send the downlink packet service data to the UE.

Further, the data transmission device 801 may be further configured to manage and control radio resources and provide a connection interface for communication with another network element when the data transmission device 801 is applied in 3G network architecture, and/or manage and control radio resources and provide a connection interface for communication with another network element when the data transmission device 801 is applied in long term evolution network architecture.

Specifically, when the data transmission device 801 is configured to manage and control radio resources and provide a connection interface for communication with another network element in the 3G network architecture, the data transmission device 801 may have a radio resource control function (such as an RNC function) and Iub, Iu-CS/PS and Iur interface functions, and optionally, may further have a GGSN function. When the data transmission device 801 is configured to manage and control radio resources and provide a connection interface for communication with another network element in the LTE network architecture, the data transmission device 801 may have S1 and X2 interface functions, and optionally, may further have a P-GW function.

Optionally, in this embodiment, if the data transmission device 801 determines that the uplink packet service data sent by the UE to the PDN does not need distribution, the data transmission device 801 may transmit the packet service data to a GGSN/P-GW on a core network through a locally preset Iu-PS interface or S1 interface via an IP backbone network and an SGSN/MME on the core network, and the GGSN/P-GW transmits the uplink packet service data to the PDN.

Further, in this embodiment, the data transmission device 801 may further have functions such as Cache, P4P Switch and Firewall.

For details about implementation of the communication system provided in the embodiment of the present invention, reference may be made to description of the data transmission device provided in the embodiments of the present invention, and details are not described herein.

According to the communication system provided in the embodiment of the present invention, packet service data transmitted between a UE and a PDN can be distributed and injected through a data transmission device located on an optical line terminal of a radio access network, and a position of a service distribution/injection point in network architecture is lowered, a data transmission distance between the UE and the PDN is shortened, operation and maintenance cost of the radio network is saved, quality of service is improved, and the communication system is applicable to development of services requiring high quality of service, such as a broadband video service. As the data transmission device has radio resource management and control functions in the 3G and LTE network architecture, technical solutions provided in the embodiment of the present invention avoid a problem of operator device investment loss during a network evolution process in the prior art due to that a 3G network includes an RNC device but an LTE network has no RNC device. As the data transmission device provided in the embodiment of the present invention is integrated with interface functions (such as Iub, Iu-CS/PS and Iur interfaces, as well as S1 and X2 interfaces), deployment of a radio access device on a radio access network is more flexible, thereby reducing network operation and maintenance cost and solving a problem in the prior art that, in the LTE network architecture, due to a large number of evolved base stations (integrated with radio access and interface functions), connections between the evolved base stations and other network elements (such as core network elements or other evolved base stations) are complex and network operation and maintenance cost is high. A base band unit is set on the data transmission device, so that a base band unit pool (BBU Pool) is formed inside the data transmission device, thereby enhancing BBU resource sharing and meanwhile increasing cell edge gains.

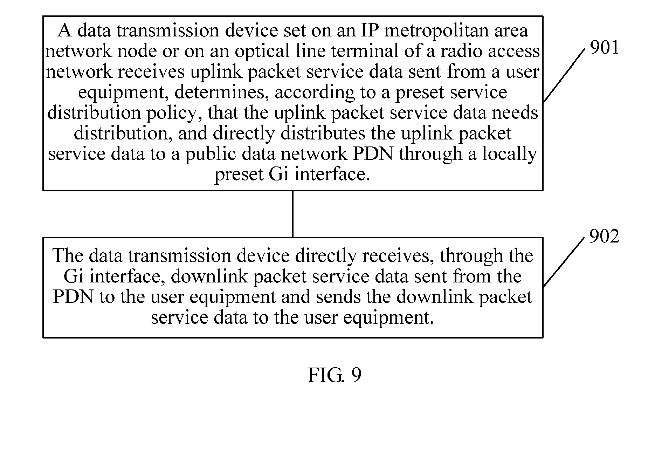

As shown in FIG. 9, an embodiment of the present invention further provides a data transmission method, including:
step 901: A data transmission device set on an IP metropolitan area network node or on an optical line terminal of a radio access network receives uplink packet service data sent by a user equipment, determines, according to a preset service distribution policy, that the uplink packet service data needs distribution, and directly distributes the uplink packet service data to a public data network PDN through a locally preset Gi interface; and/or
step 902: The data transmission device directly receives, through the Gi interface, downlink packet service data sent by the PDN to the user equipment and sends the downlink packet service data to the user equipment.

In this embodiment, various forms of service distribution policies may exist. For example, a service distribution policy may be APNs that need distribution. If an APN included in the uplink packet service data is the same as an APN that needs distribution and is included in the service distribution policy, the uplink packet service data needs distribution. For another example, a service distribution policy may be a service type (such as an Internet service or a video service) of services that need distribution. If a service type included in the uplink packet service data is the same as a service type that needs distribution and is included in the service distribution policy, the uplink packet service data needs distribution. Definitely, the service distribution policy may be set in other forms in practice, and detailed description for each situation is not provided herein.

The sequence of performing the steps shown in FIG. 9 is not limited by the data transmission method provided in the embodiment of the present invention. Step 901 may be performed before step 902 or after step 902.

Optionally, the data transmission method provided in the embodiment of the present invention may further include:
if it is determined according to the preset service distribution policy that the uplink packet service data does not need distribution, the uplink packet service data is transmitted to a GGSN or P-GW on a core network through a locally preset Iu-PS interface or S1 interface via an IP backbone network and an SGSN or MME on the core network, and the GGSN or the P-GW transmits the uplink packet service data to the PDN.

Optionally, the data transmission method provided in the embodiment of the present invention may further include:
in 3G network architecture, the data transmission device manages and controls radio resources through a preset radio resource control function and/or GGSN function; and/or
in long term evolution network architecture, the data transmission device manages and controls radio resources through a preset P-GW function.

For details about implementation of the data transmission method provided in the embodiment of the present invention, reference may be made to the solutions of the data transmission device and the communication system provided in the embodiments of the present invention, and the details are not described in detail herein.

According to the data transmission method provided in the embodiment of the present invention, packet service data transmitted between a user equipment and a PDN can be distributed and injected through a data transmission device located on an IP metropolitan area network node or on an optical line terminal of a radio access network, and a position of a service distribution/injection point in network architecture is lowered, a data transmission distance between the user equipment and the PDN is shortened, operation and maintenance cost of a radio network is saved, quality of service is improved, and the data transmission method is applicable to development of services requiring high quality of service, such as a broadband video service. In addition, the data transmission device may provide functions such as radio resource management and control in the 3G and/or LTE network architecture and a connection interface for communication with another network element. As the data transmission device has the radio resource management and control functions in the 3G and LTE network architecture, technical solutions provided in the embodiment of the present invention avoid a problem of operator device investment loss during a network evolution process in the prior art due to that a 3G network includes an RNC device but an LTE network has no RNC device. As the data transmission device provided in the embodiment of the present invention is integrated with interface functions (such as Iub, Iu-CS/PS and Iur interfaces, as well as S1 and X2 interfaces), deployment of a radio access device on a radio access network is more flexible, thereby reducing network operation and maintenance cost and solving a problem in the prior art that, in the LTE network architecture, due to a large number of evolved base stations (integrated with radio access and interface functions), connections between the evolved base stations and other network elements (such as core network elements or other evolved base stations) are complex and network operation and maintenance cost is high.

In order to make persons skilled in the art understand technical solutions provided in the embodiments of the present invention more clearly, an example that packet service data is transmitted between a UE and a PDN by adopting the data transmission device and the communication system provided in the embodiments of the present invention in UMTS/HSPA network architecture is taken for illustration.

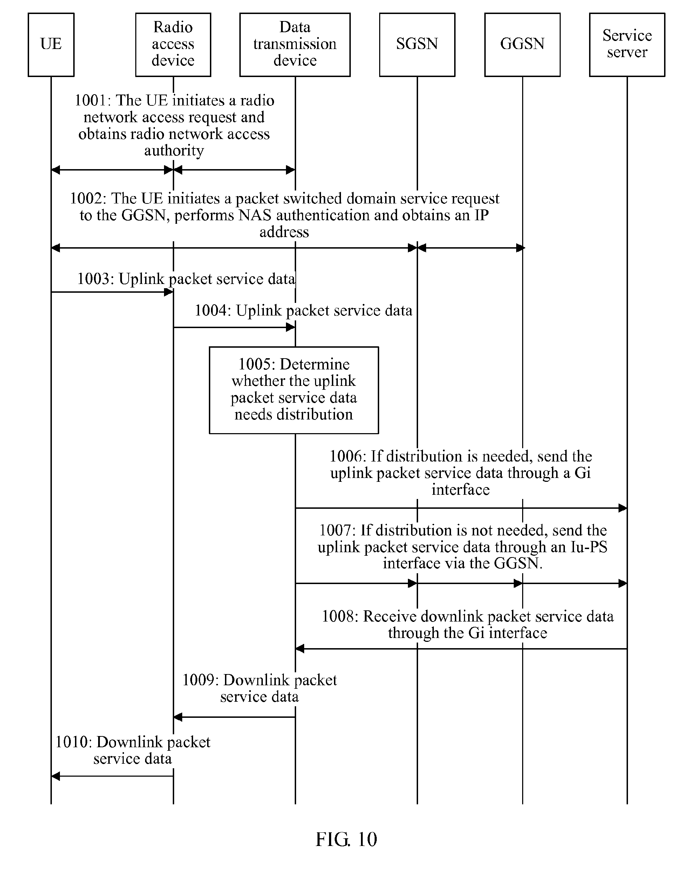

This embodiment adopts a communication system shown in FIG. 6, where the radio access device is embedded in a NodeB on a radio access network. As shown in FIG. 10, a method for transmitting packet service data between a UE and a PDN by adopting the data transmission device and the communication system provided in the embodiments of the present invention includes the following steps.
Step 1001: A UE initiates a radio network access request to a data transmission device through a radio access device and obtains a radio network access right.
Step 1002: The UE initiates a packet switched domain service request to a GGSN on a core network, performs non access stratum (Non Access Stratum, NAS) authentication with the GGSN and obtains an IP address.

Optionally, if the data transmission device has a GGSN function, then in step 1002, the UE may initiate a packet switched domain service request to the data transmission device, and the data transmission device performs NAS authentication on the UE and allocates an IP address to the UE.

When uplink packet service data needs to be transmitted:
Step 1003: The UE sends the uplink packet service data to the radio access device.
In this embodiment, the radio access device may include an RRU and a BBU. Specifically, the UE sends the uplink packet service data to the RRU of the radio access device, and then the RRU transmits the uplink packet service data to the BBU.
Step 1004: The radio access device sends the uplink packet service data of the UE to the data transmission device through an IDX interface via a fiber network.
Step 1005: The data transmission device determines, according to a preset service distribution policy, whether the uplink packet service data needs distribution; if distribution is needed, step 1006 is performed; otherwise, step 1007 is performed.

In this embodiment, the data transmission device may obtain the service distribution policy from a locally preset storage module or may also obtain the service distribution policy from other network elements (such as a PCRF). The data transmission device may determine, according to the service distribution policy and different APNs of a subscriber and service, whether the uplink packet service data of the UE needs distribution. Further, when APNs are the same, the data transmission device may further adopt a deep packet inspection technology (DPI) to obtain information such as an IP address of a destination service server or a service type from the uplink packet service data, and determine, according to the service distribution policy and the information such as the IP address of the destination service server or the service type, whether the uplink packet service data needs distribution.
Step 1006: The data transmission device directly distributes the uplink packet service data of the UE to a service server of the PDN through a locally preset Gi interface, to complete transmission of the uplink packet service data.
Step 1007: The data transmission device sends the uplink packet service data of the UE to the GGSN through a locally preset Iu-PS interface via an IP backbone network and an SGSN on the core network, and then the GGSN sends the uplink packet service data to the service server of the PDN, to complete transmission of the uplink packet service data.

Optionally, when downlink packet service data needs to be transmitted:
Step 1008: The data transmission device directly receives from the PDN, through the Gi interface, downlink packet service data sent by the service server to the UE.
Step 1009: The data transmission device sends the downlink packet service data to the radio access device through the IDX interface via the fiber network.
Step 1010: The radio access device sends the downlink packet service data to the UE, to complete transmission of the downlink packet service data.

According to the data transmission device and method and the communication system provided in the embodiments of the present invention, packet service data transmitted between a user equipment and a PDN can be distributed and injected through a data transmission device located on an IP metropolitan area network node, and a position of a service distribution/injection point in network architecture is lowered, a data transmission distance between the user equipment and the PDN is shortened, operation and maintenance cost of a radio network is saved, quality of service is improved, and the data transmission device and method and the communication system can be applicable to development of services requiring high quality of service, such as a broadband video service. As the radio access device and the data transmission device adopt two-level architecture setting, deployment of the radio access device on the radio access network is more flexible, so as to meet requirements of low maintenance cost and flexible deployment of radio access.

The data transmission device and method and the communication system provided in the embodiments of the present invention can be applied in radio communication systems such as 3G or LTE.

Persons of ordinary skill in the art may understand that all or part of the steps of the method according to the embodiments of the present invention may be implemented by a program instructing relevant hardware. The program may be stored in a computer readable storage medium. The storage medium may be a ROM/RAM, a magnetic disk or an optical disk.

The above description is merely exemplary embodiments of the present invention, but not intended to limit the protection scope of the present invention. Any variation or replacement easily thought of by persons skilled in the art without departing from technical scope disclosed in the present invention should fall within the protection scope of the present invention. Therefore, the protection scope of the present invention is subject to the appended claims.

## Claims

1. A data transmission device, wherein the data transmission device is located on an IP metropolitan area network node or on an optical line terminal of a radio access network, comprising:
a first service bypass processing module, configured to receive uplink packet service data sent by a user equipment, determine, according to a preset service distribution policy, that the uplink packet service data needs distribution, and directly distribute the uplink packet service data to a public data network, PDN, through a locally preset Gi interface; and/or
a second service bypass processing module, configured to directly receive, through the Gi interface, downlink packet service data sent by the PDN to the user equipment, and send the downlink packet service data to the user equipment.

2. The data transmission device according to claim 1, wherein the data transmission device further comprises:
a first management module, configured to manage and control radio resources and provide a connection interface for communication with another network element when the data transmission device is applied in 3G network architecture; and/or
a second management module, configured to manage and control radio resources and provide a connection interface for communication with another network element when the data transmission device is applied in long term evolution network architecture.

3. The data transmission device according to claim 2, wherein the first management module has Iub, Iu-CS/PS and Iur interface functions; or
Iub, Iu-CS/PS and Iur interface functions and a gateway GPRS support node, GGSN, function.

4. The data transmission device according to claim 2, wherein the second management module has S1 and X2 interface functions, or S1 and X2 interface functions and a packet data gateway, P-GW, function.

5. The data transmission device according to claim 2, further comprising:
a control module, configured to manage and control function setting and working status of the first service bypass processing module, the second service bypass processing module, the first management module and the second management module.

6. The data transmission device according to claim 1, further comprising:
a base band unit module, configured to communicate with a radio remote unit, RRU, through a common public radio interface, CPRI.

7. A communication system, comprising:
a data transmission device, located on an IP metropolitan area network node or on an optical line terminal of a radio access network, configured to receive, from a radio access device, uplink packet service data sent by a user equipment, determine, according to a preset service distribution policy, that the uplink packet service data needs distribution, and directly distribute the uplink packet service data to a public data network, PDN, through a locally preset Gi interface, and/or configured to directly receive, through the Gi interface, downlink packet service data sent by the PDN to the user equipment, and send the downlink packet service data to the radio access device; and
the radio access device, located on a radio access network node, comprising an RRU and a base band unit, BBU, wherein the radio access device is connected to the data transmission device through an IDX interface via a high bandwidth bearer network, and the radio access device is configured to receive the uplink packet service data sent by the user equipment, and send the uplink packet service data to the data transmission device, and/or receive the downlink packet service data sent by the data transmission device, and send the downlink packet service data to the user equipment.

8. The communication system according to claim 7, wherein the data transmission device is further configured to manage and control radio resources and provide a connection interface for communication with another network element when the data transmission device is applied in 3G network architecture, and/or manage and control radio resources and provide a connection interface for communication with another network element when the data transmission device is applied in long term evolution network architecture.

9. A communication system, comprising:
a data transmission device, located on an IP metropolitan area network node or on an optical line terminal of a radio access network, configured to receive, through a base band unit, uplink packet service data of a user equipment sent by a radio remote unit device, determine, according to a preset service distribution policy, that the uplink packet service data needs distribution, and directly distribute the uplink packet service data to a public data network, PDN, through a locally preset Gi interface, and/or configured to directly receive, through the Gi interface, downlink packet service data sent by the PDN to the user equipment, and send the downlink packet service data to the radio remote unit device through the base band unit, wherein the base band unit is located on the data transmission device; and
the radio remote unit device, located on a radio access network node, connected to the base band unit of the data transmission device through a CPRI interface via a high bandwidth bearer network, and configured to receive the uplink packet service data sent by the user equipment, and send the uplink packet service data to the base band unit of the data transmission device, and/or receive the downlink packet service data sent by the base band unit of the data transmission device, and send the downlink packet service data to the user equipment.

10. The communication system according to claim 9, wherein the data transmission device is further configured to manage and control radio resources and provide a connection interface for communication with another network element when the data transmission device is applied in 3G network architecture, and/or manage and control radio resources and provide a connection interface for communication with another network element when the data transmission device is applied in long term evolution network architecture.

11. A data transmission method, comprising:
receiving, by a data transmission device located on an IP metropolitan area network node or on an optical line terminal of a radio access network, uplink packet service data sent by a user equipment, determining, according to a preset service distribution policy, that the uplink packet service data needs distribution, and directly distributing the uplink packet service data to a public data network, PDN, through a locally preset Gi interface; and/or
directly receiving, by the data transmission device, through the Gi interface, downlink packet service data sent by the PDN to the user equipment, and sending the downlink packet service data to the user equipment.

12. The data transmission method according to claim 11, further comprising:
if determining, according to the preset service distribution policy, that the uplink packet service data does not need distribution, transmitting the uplink packet service data to a GGSN or a P-GW on a core network through a locally preset Iu-PS interface or S1 interface via an IP backbone network and a serving GPRS support node or a mobility management entity on the core network, and transmitting, by the GGSN or the P-GW, the uplink packet service data to the PDN.

13. The data transmission method according to claim 11, further comprising:
in 3G network architecture, managing and controlling, by the data transmission device, radio resources through a preset radio resource control function and/or GGSN function; and/or
in long term evolution network architecture, managing and controlling, by the data transmission device, radio resources through a preset P-GW function.
